# EUROPEAN PATENT APPLICATION

(11) **EP 1 431 791 A2**
(43) Date of publication of application: **23.06.2004**
(21) Application number: 03027762.8
(22) Date of filing: 03.12.2003
(51) Int. Cl.: G02B 6/44

(54) **Central strength member for optical cable**

(30) Priority: 19.12.2002 US 322511
(71) Applicant: ALCATEL, 75008 Paris (FR)
(72) Inventor: Dewitt, William, NC 28601 Hickory (US)
(74) Representative: Dreiss, Fuhlendorf, Steimle & Becker

(57) **Abstract**

A strength member for a fiber optic cable having reinforcing fibers (4) that are oriented in a non-longitudinal direction within a matrix material (5). By orienting the reinforcing fibers in a non-longitudinal direction within the matrix material, the strength member gains strength in tension and in torsion. The reinforcing fibers (4) are oriented in a cross-helical pattern within the matrix material (5) or they can be chopped into smaller fragments and randomly oriented within the matrix material. Additionally, the strength member can have a hollow core regardless of the orientation of the reinforcing fibers and still increase the strength of the strength member in tension and torsion. Finally, the diameter of the strength member can be altered by adding a soft plastic outer cover (6) surrounding the solid strength member.

## Description

### BACKGROUND OF THE INVENTION

The present invention relates generally to central strength members for fiber optic cables, and more specifically to central strength members having non-longitudinally oriented glass filaments for increasing torsional strength.

Fiber optic cables have been used by the telecommunications industry for a number of years to transmit information at very high rates over long distances. Fiber optic cables come in a variety of configurations, including: cables with a centrally located single buffer tube containing one or more optical fibers; cables with a plurality of buffer tubes stranded in a helical or alternating helical arrangement about a central strength member; and cables with slotted cores in which a plurality of optical fibers reside.

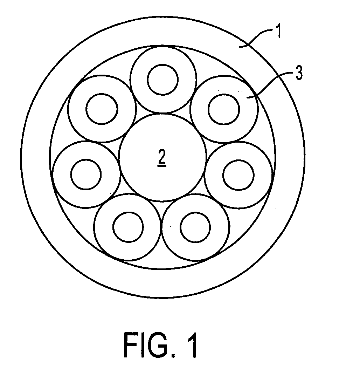

Strength members provide tensile strength and stability to a fiber optic cable. Generally, the strength member is surrounded by plurality of stranded buffer tubes containing optical fibers. The buffer tubes and strength member are disposed within a fiber optic cable as shown in Figure 1. It can be seen that the fiber optic cable 1 contains a plurality of buffer tubes 3 stranded around a central strength member 2. When disposed in the center of a plurality of buffer tubes 3, the strength member 2 is often referred to as a central strength member 2.

The central strength member 2 is usually a solid rigid rod composed of a composite of reinforcing fibers encapsulated in a matrix material. A common example of such a composition would be a composite of glass filaments in a resin material. This composite is called glass reinforced plastic or GRP.

The diameter of the strength member 2 varies depending on the number of required buffer tubes 3. The strength member 2 is either a solid rod having the correct diameter to accommodate the required buffer tubes 3 or a solid rod having a smaller diameter than required but having a soft plastic coating to bring the diameter up to the correct diameter. Using a soft plastic coating to replace part of the strength member 2 reduces the overall weight of the strength member 2 which is sometimes desired.
Additionally, the strength member 2 is generally made of expensive material and thus, by reducing the size of the strength member 2, the overall cost of the fiber optic cable 1 is also reduced.

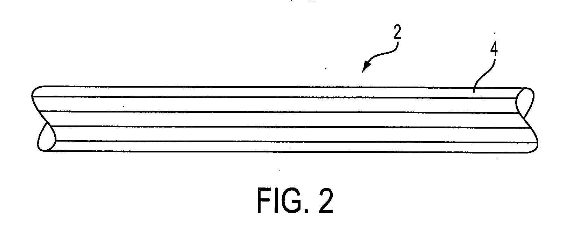

Conventionally, the strength member is made of a large number of glass filaments oriented in a longitudinal direction within the resin as shown in Figure 2. In other words, the glass filaments 4 are oriented parallel with each other and parallel to the axis of the strength member 2. The glass filaments 4 are continuous down the length of the strength member 2. In this configuration, the strength member 2 is strong in the longitudinal (or axial) direction (i.e. in tension) but very weak in torsion (i.e. twisting). Therefore, it is desirable to have a central strength member 2 that has increased torsional strength.

### SUMMARY OF THE INVENTION

To provide strength in both tension and torsion, novel strength members are disclosed herein. The strength member of the present invention can be designed in a number of ways to give strength in both tension and torsion. First, the reinforcing fibers of the strength member can be oriented in a non-longitudinal manner, such as in a cross-helical pattern, within the matrix material. This results in increased strength in both tension and torsion. Second, chopped reinforcing fibers are randomly oriented within the matrix material. Chopped reinforcing fibers are short sections or fragments of the reinforcing fibers.

Additionally, the strength member can be designed to have a hollow core or center. Said differently, the strength member is not solid in cross-section but instead has a hollow core or center. With a hollow core, the strength member can have any type of orientation for its reinforcing fibers, including longitudinally orienting the reinforcing fibers within the matrix material. These strength member designs provides the desired strength in both tension and torsion.

### BRIEF DESCRIPTION OF THE DRAWINGS

The above aspects of the present invention will become more apparent by describing in detail embodiments thereof with reference to the attached drawings, in which:
- Figure 1: is a cross-sectional view of a fiber optic cable having a plurality of buffer tubes and a central strength member;
- Figure 2: is an exterior view of a strength member showing the reinforcing fibers oriented in a longitudinal direction within the matrix material;
- Figure 3: is an exterior view of a strength member of the present invention showing the reinforcing fibers oriented in a cross-helical pattern within the matrix material;
- Figure 4: is an exterior view of a strength member of the present invention showing chopped reinforcing fibers randomly-oriented within the matrix material.
- Figure 5: is a cross-sectional view of a strength member of the present invention having an outer coating; and
- Figure 6: is a cross-sectional view of a strength member of the present invention having a hollow core.

### DETAILED DESCRIPTION OF THE INVENTION

Hereinafter, embodiments of the present invention will be described in detail with reference to the attached drawings. The present invention is not restricted to the following embodiments, and many variations are possible within the spirit and scope of the present invention. The embodiments of the present invention are provided in order to more completely explain the present invention to one skilled in the art.

Referring to Figure 1, a fiber optic cable 1 is illustrated having a plurality of buffer tubes 3 and a central strength member 2. As shown, the buffer tubes 3 are stranded around the central strength member 2. The size, shape, number and orientation of the buffer tubes 3 are not limited in the present invention. Additionally, although Figure 1 shows a central strength member 2, the strength member 2 is not limited to being disposed in the center of the buffer tubes 3 or center of the fiber optic cable 1. The strength member 2 may be arranged, sized or shaped in any desired manner within the fiber optic cable and more than one strength member 2 may be used. Furthermore, the fiber optic cable 1 may have other components disposed therein such as gel compounds, tapes, yarns...etc.

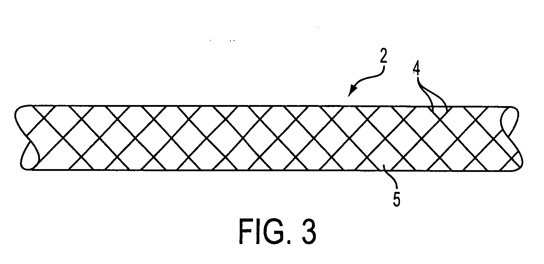

Referring to Figure 3, a preferred embodiment of the strength member 2 of the present invention is shown. The strength member 2 is made of reinforcing fibers 4 disposed within a matrix material 5. The reinforcing fibers 4 are oriented in a non-longitudinal manner. Said differently, the reinforcing fibers 4 are not oriented parallel to the longitudinal or axial direction of the strength member 2. As shown in Figure 3, the reinforcing members 4 can preferably be oriented in a cross-helical pattern within the matrix material 5.

The matrix material 5 is a binder material that encompasses the reinforcing fibers 4. The matrix material 5 can be many different types of materials, such as resins, epoxy, and thermoplastics. Similarly, the reinforcing fibers 4 can be many different types of materials, such as glass, wool, carbon, aramid and polyester.

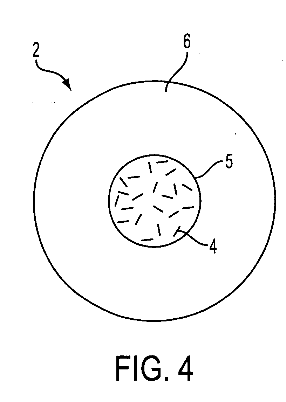

Referring to Figure 4, another embodiment of the strength member 2 of the present invention is shown. In a similar manner as described above, reinforcing fibers 4 are disposed within a matrix material 5. However, in this embodiment, the reinforcing fibers 4 are chopped, that is, the reinforcing fibers 4 are short fragments of longer reinforcing fibers 4. Each "chopped" reinforcing fiber 4 is generally shorter in length than the cross-sectional diameter of the strength member 2. The "chopped" reinforcing fibers 4 are randomly-oriented within the matrix material 5. By providing this random orientation, the strength member 2 becomes stronger in both tension and torsion.

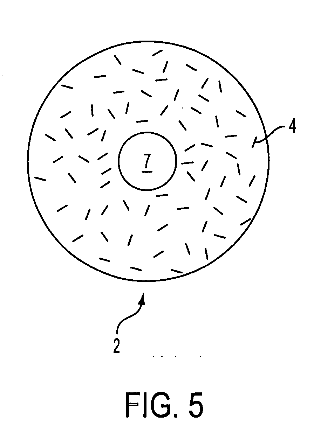

Referring to Figure 5, a strength member 2 is shown having an outer coating 6. The outer coating 6 is generally made from a softer thermoplastic, such as polyethylenes or polypropylenes, and is provided to adjust the cross-sectional diameter of the strength member 2 to the desired size. Additionally, the outer coating 6 can replace part of the glass reinforced plastic 5, thereby creating a lighter strength member 2. For example, many times, a large heavy strength member 2 is not needed in a fiber optic cable 1. In these circumstances, it is often desirable to use a lighter strength member 2 while not decreasing the cross-sectional diameter of the strength member 2. Accordingly, a light plastic coating 6 is disposed on the outer surface of the glass reinforced plastic 5 (or any other type of strength member, not limited to glass reinforce plastic). As a result, the cross-sectional diameter of the strength member 2 remains the same while some of the heavy GRP 5 is essentially replaced by a lighter plastic outer coating 6.

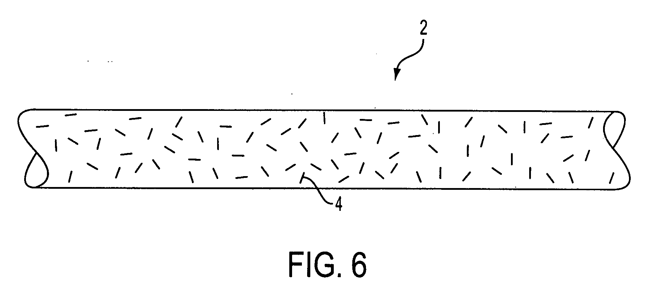

Referring to Figure 6, a strength member 2 is shown having a hollow core 7. Another way to increase the strength of the strength member 2 in torsion and tension is to design the strength member 2 to have hollow core 7 which runs in the longitudinal direction of the strength member 2. The cross-sectional diameter of the hollow core 7 can be varied in size and shape. Furthermore, the composition of the strength member 2 can be any of the previously described compositions. Said differently, the reinforcing fibers 4 can be oriented in any of the previously described manners. Additionally, when the hollow core 7 is added to the strength member 2, the strength member 2 gains strength in torsion. Therefore, if desired, the reinforcing fibers 4 can be oriented in the longitudinal direction since the hollow core 7 structure gives the strength member 2 increased strength in torsion. Accordingly, the reinforcing fibers 4 oriented in the longitudinal direction would provide the needed strength in tension and the hollow core design would provide the needed strength in torsion.

It is understood that departures can be made from the preferred embodiments of the invention by those of ordinary skill in the art without departing from the spirit and scope of the invention that is limited only by the following claims.

## Claims

1. A strength member for a cable extending in a longitudinal direction comprising:
a matrix material; and
a plurality of reinforcing fibers, wherein said plurality of reinforcing fibers are oriented in a non-longitudinal direction within said matrix material.

2. The strength member of claim 1, wherein said plurality of reinforcing fibers are oriented in a cross-helical pattern within said matrix material.

3. The strength member of claim 1, wherein said plurality of reinforcing fibers are chopped and randomly oriented with said matrix material.

4. The strength member of claim 1, wherein said strength member has a hollow core.

5. The strength member of claim 1, wherein said strength member has a outer coating.

6. The strength member of claim 1, wherein said plurality of reinforcing fibers are glass filaments.

7. The strength member of claim 1, wherein said plurality of reinforcing fibers are carbon filaments.

8. The strength member of claim 1, wherein said plurality of reinforcing fibers are aramid filaments.

9. The strength member of claim 1, wherein said plurality of reinforcing fibers are polyester filaments.

10. The strength member of claim 1, wherein said plurality of reinforcing fibers are wool filaments.

11. The strength member of claim 4, wherein said plurality of reinforcing fibers are oriented in a cross-helical pattern within said matrix material.

12. The strength member of claim 4, wherein said plurality of reinforcing fibers are chopped and randomly oriented with said matrix material.

13. A strength member for a cable extending in a longitudinal direction comprising:
a matrix material;
a plurality of reinforcing fibers, wherein said plurality of reinforcing fibers are oriented in a longitudinal direction within said matrix material; and
wherein said strength member has a hollow core.

14. The strength member of claim 1, wherein said matrix material is a resin material.

15. The strength member of claim 1, wherein said matrix material is an epoxy material.

16. The strength member of claim 1, wherein said matrix material is a thermoplastic material.

17. A cable extending in a longitudinal direction comprising:
an outer jacket;
at least one buffer tube having a plurality of optical fibers, said at least one buffer tube disposed within said outer jacket; and
a strength member disposed within said outer jacket,
wherein said strength member further comprises a plurality of reinforcing fibers oriented in a non-longitudinal direction within a matrix material.

18. The fiber optic cable of claim 17, wherein said plurality of reinforcing fibers are oriented in a cross-helical pattern within said matrix material.

19. The fiber optic cable of claim 17, wherein said plurality of reinforcing fibers are chopped and randomly oriented with said matrix material.

20. The fiber optic cable of claim 17, wherein said strength member has a hollow core.
